# EUROPEAN PATENT APPLICATION

(11) **EP 4 723 766 A1**
(43) Date of publication of application: **08.04.2026**
(21) Application number: 23938816.8
(22) Date of filing: 30.05.2023
(51) Int. Cl.: H04W 68/00

(54) **WIRELESS COMMUNICATION METHOD, TERMINAL DEVICE, AND NETWORK DEVICE**

(71) Applicant: GUANGDONG OPPO MOBILE TELECOMMUNICATIONS CORP., LTD., Dongguan, Guangdong 523860 (CN)
(72) Inventor: DU, Zhongda, Dongguan, Guangdong 523860 (CN)
(74) Representative: RGTH
(86) International application number: PCT/CN2023/097241
(87) International publication number: WO 2024/243822

(57) **Abstract**

Provided are a wireless communication method, a terminal device, and a network device. The method comprises: a terminal device uses a first communication module to receive a first paging message sent by a network device, the first paging message being used for determining whether to wake up a second communication module in the terminal device; the communication capability of the first communication module is different from that of the second communication module. That is, the introduction of the first paging message allows the terminal device to determine which communication module to use to communicate with the network device, which is beneficial in increasing the possibility of communication between different communication modules in the terminal device and the network device, thereby preventing waste.

## Description

### TECHNICAL FIELD

This application relates to the field of communications technologies, and more specifically, to a wireless communication method, a terminal device, and a network device.

### BACKGROUND

Currently, a power saving technical solution formulated in a communications protocol is formulated only for a terminal device that has a single communications module, without considering applicability for a terminal device that has a plurality of communications modules. As a result, another communications module in the terminal device cannot communicate with a network device, resulting in a waste.

### SUMMARY

This application provides a wireless communication method, a terminal device, and a network device. Various aspects involved in this application are described below.

According to a first aspect, a wireless communication method is provided, including: receiving, by a terminal device by using a first communications module, a first paging message transmitted by a network device, where the first paging message is used to determine whether to wake up a second communications module in the terminal device, and a communication capability of the first communications module is different from a communication capability of the second communications module.

According to a second aspect, a wireless communication method is provided, including: transmitting, by a network device, a first paging message to a first communications module in a terminal device, where the first paging message is used to determine whether to wake up a second communications module in the terminal device, and a communication capability of the first communications module is different from a communication capability of the second communications module.

According to a third aspect, a terminal device is provided, including: a processing unit, configured to receive, by using a first communications module, a first paging message transmitted by a network device, where the first paging message is used to determine whether to wake up a second communications module in the terminal device, and a communication capability of the first communications module is different from a communication capability of the second communications module.

According to a fourth aspect, a network device is provided, including: a transmitting unit, configured to transmit a first paging message to a first communications module in a terminal device, where the first paging message is used to determine whether to wake up a second communications module in the terminal device, and a communication capability of the first communications module is different from a communication capability of the second communications module.

According to a fifth aspect, a terminal device is provided, including a processor, a memory, and a communications interface. The memory is configured to store one or more computer programs. The processor is configured to invoke the computer program in the memory, to cause the terminal device to perform some or all of the steps in the method according to the first aspect.

According to a sixth aspect, a network device is provided, including a processor, a memory, and a transceiver. The memory is configured to store one or more computer programs, and the processor is configured to invoke the computer program in the memory, to cause the network device to perform some or all of the steps in the method according to the second aspect.

According to a seventh aspect, an embodiment of this application provides a communications system. The system includes the foregoing terminal device and/or the foregoing network device. In another possible design, the system may further include another device that interacts with the terminal device or the network device in the solutions provided in embodiments of this application.

According to an eighth aspect, an embodiment of this application provides a computer-readable storage medium. The computer-readable storage medium stores a computer program. The computer program causes a communications device (for example, a terminal device or a network device) to perform some or all of the steps in the method according to the foregoing aspects.

According to a ninth aspect, an embodiment of this application provides a computer program product. The computer program product includes a non-transitory computer-readable storage medium that stores a computer program. The computer program is operable to cause a communications device (for example, a terminal device or a network device) to perform some or all of the steps in the method according to the foregoing aspects. In some implementations, the computer program product may be a software installation package.

According to a tenth aspect, an embodiment of this application provides a chip. The chip includes a memory and a processor. The processor may invoke a computer program from the memory and run the computer program, to implement some or all of the steps described in the method according to the foregoing aspects.

In embodiments of this application, a terminal device may receive, by using a first communications module, a first paging message transmitted by a network device, where the first paging message is used to determine whether to wake up a second communications module. In other words, the terminal device can determine to communicate with the network device by using which communications module based on the first paging message, thereby being beneficial to increasing possibilities of communication between the network device and different communications modules in the terminal device, and preventing waste.

### BRIEF DESCRIPTION OF DRAWINGS

FIG. 1 shows a wireless communications system 100 to which embodiments of this application are applied.
FIG. 2 is a schematic diagram of a terminal device to which embodiments of this application are applicable.
FIG. 3 is a schematic flowchart of a wireless communication method according to an embodiment of this application.
FIG. 4 is a flowchart of a wireless communication method according to an embodiment of this application.
FIG. 5 is a flowchart of a wireless communication method according to another embodiment of this application.
FIG. 6 is a schematic diagram of a terminal device according to an embodiment of this application.
FIG. 7 is a schematic diagram of a network device according to an embodiment of this application.
FIG. 8 is a schematic structural diagram of a communications apparatus according to an embodiment of this application.

### DESCRIPTION OF EMBODIMENTS

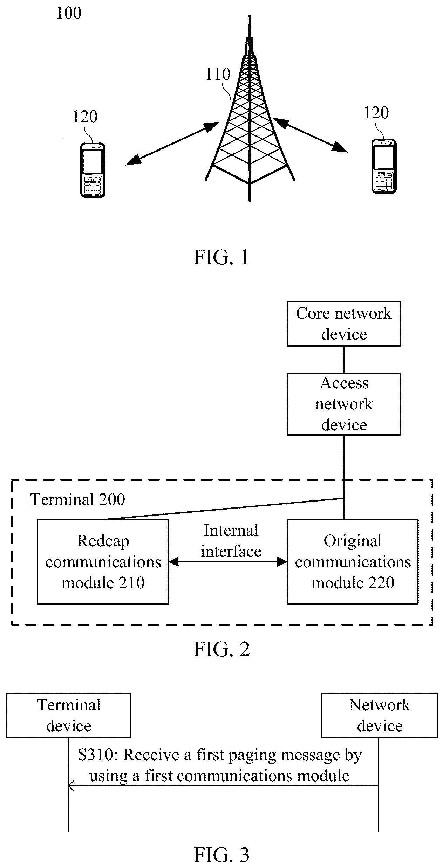

Technical solutions in this application are described below with reference to the accompanying drawings. FIG. 1 shows a wireless communications system 100 to which embodiments of this application are applied. The wireless communications system 100 may include a network device 110 and a terminal device 120. The network device 110 may be a device that communicates with the terminal device 120. The network device 110 may provide communication coverage for a specific geographic area, and may communicate with the terminal device 120 within the coverage.

FIG. 1 exemplarily shows one network device and two terminals. Optionally, the wireless communications system 100 may include a plurality of network devices, and another quantity of terminal devices may be included in a coverage of each network device, which is not limited in embodiments of this application.

Optionally, the wireless communications system 100 may further include another network entity such as a network controller or a mobility management entity, which is not limited in embodiments of this application.

It should be understood that the technical solutions of embodiments of this application may be applied to various communications systems, such as a 5th generation (5th generation, 5G) system or a new radio (new radio, NR) system, a long term evolution (long term evolution, LTE) system, an LTE frequency division duplex (frequency division duplex, FDD) system, and an LTE time division duplex (time division duplex, TDD) system. The technical solutions provided in this application may further be applied to a future communications system, such as a 6th generation mobile communications system or a satellite communications system.

The terminal device in embodiments of this application may also be referred to as user equipment (user equipment, UE), an access terminal, a subscriber unit, a subscriber station, a mobile site, a mobile station (mobile station, MS), a mobile terminal (mobile terminal, MT), a remote station, a remote terminal, a mobile device, a user terminal, a terminal, a wireless communications device, a user agent, or a user apparatus. The terminal device in embodiments of this application may be a device providing a user with voice and/or data connectivity and capable of connecting people, objects, and machines, such as a handheld device or a vehicle-mounted device having a wireless connection function. The terminal device in embodiments of this application may be a mobile phone (mobile phone), a tablet computer (Pad), a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self driving (self driving), a wireless terminal in remote medical surgery (remote medical surgery), a wireless terminal in smart grid (smart grid), a wireless terminal in transportation safety (transportation safety), a wireless terminal in smart city (smart city), a wireless terminal in smart home (smart home), or the like. Optionally, the UE may be configured to function as a base station. For example, the UE may function as a scheduling entity, which provides a sidelink signal between UEs in V2X, D2D, or the like. For example, a cellular phone and a vehicle communicate with each other through a sidelink signal. The cellular phone and a smart home device communicate with each other, without relaying a communication signal through a base station.

The network device in embodiments of this application may be a device configured to communicate with the terminal device. The network device may also be referred to as an access network device or a radio access network device. For example, the network device may be a base station. The network device in embodiments of this application may be a radio access network (radio access network, RAN) node (or device) that connects the terminal device to a wireless network. The base station may broadly cover the following various names, or may be replaced with the following names, such as a NodeB (NodeB), an evolved NodeB (evolved NodeB, eNB), a next generation NodeB (next generation NodeB, gNB), a relay station, an access point, a transmitting and receiving point (transmitting and receiving point, TRP), a transmitting point (transmitting point, TP), a master eNode MeNB, a secondary eNode SeNB, a multi-standard radio (MSR) node, a home base station, a network controller, an access node, a radio node, an access point (access point, AP), a transmission node, a transceiver node, a baseband unit (base band unit, BBU), a remote radio unit (Remote Radio Unit, RRU), an active antenna unit (active antenna unit, AAU), a remote radio head (remote radio head, RRH), a central unit (central unit, CU), a distributed unit (distributed unit, DU), and a positioning node. The base station may be a macro base station, a micro base station, a relay node, a donor node or the like, or a combination thereof. Alternatively, the base station may be a communications module, a modem, or a chip disposed in the device or apparatus described above. Alternatively, the base station may be a mobile switching center, a device that functions as a base station in device-to-device D2D communications, vehicle-to-everything (vehicle-to-everything, V2X) communications, and machine-to-machine (machine-to-machine, M2M) communications, a network-side device in a 6G network, a device that functions as a base station in a future communications system, or the like. The base station may support networks of a same access technology or different access technologies. A specific technology and a specific device form used by the network device are not limited in embodiments of this application.

The base station may be fixed or mobile. For example, a helicopter or an unmanned aerial vehicle may be configured to function as a mobile base station, and one or more cells may move based on a position of the mobile base station. In another example, a helicopter or an unmanned aerial vehicle may be configured to function as a device in communication with another base station.

In some deployments, the network device in embodiments of this application may be a CU or a DU, or the network device includes a CU and a DU. The gNB may further include an AAU.

The network device and the terminal device may be deployed on land, including being deployed indoors or outdoors, handheld, or vehicle-mounted, may be deployed on a water surface, or may be deployed on a plane, a balloon, or a satellite in the air. In embodiments of this application, a scenario in which the network device and the terminal device are located is not limited.

It should be understood that all or some of functions of the communications device in this application may also be implemented by software functions running on hardware, or by virtualization functions instantiated on a platform (for example, a cloud platform).

### Discontinuous reception (discontinuous reception, DRX)

To reduce power consumption of a terminal, there is a DRX mechanism in both an LTE system and an NR system, so that a receiver of the terminal does not need to be always turned on when there is no data to be received, but enters a discontinuous reception state, thereby achieving power saving. The DRX mechanism includes configuring a DRX cycle (cycle) for a terminal that is in a radio resource control (radio resource control, RRC) connected state. One DRX cycle consists of an "active period (on duration)" and an "inactive period (opportunity for DRX)". During the active period, the terminal monitors and receives a downlink channel including a physical downlink control channel (physical downlink control channel, PDCCH) and a signal. During the inactive period, the terminal does not receive a downlink channel such as a PDCCH or a signal, so as to reduce power consumption.

In evolution of the 5G system, a higher requirement is proposed on power saving of the terminal. For a conventional DRX mechanism, in each active period, a terminal needs to continuously detect a PDCCH to determine whether a network device schedules data to be transmitted to the terminal. Practically, most terminals are unnecessary to receive data for a long period of time, but still need to be waked up periodically to monitor a possible downlink transmission. A power saving manner for such terminals may be further optimized.

Therefore, a power saving signal (also referred to as a "wake up signal (wake up signal, WUS)") is introduced in the 5G R16 standard, so as to further reduce power consumption. The power saving signal may be used in combination with the DRX mechanism, as shown in FIG. 2. As such, before entering the DRX active period, the terminal may first determine, based on an indication of the power saving signal, whether there is a need to receive data during the DRX active period. When the terminal device performs a data transmission in one DRX cycle, the power saving signal "wakes up" the terminal; and accordingly, the terminal monitors the PDCCH during the DRX active period. On the contrary, when the terminal device performs no data transmission in one DRX cycle, the power saving signal does not "wake up" the terminal; and accordingly, the terminal is unnecessary to monitor the PDCCH during the DRX active period. According to such a DRX mechanism combined with the power saving signal, in one DRX cycle, if the power saving signal does not wake up the terminal, the terminal is unnecessary to monitor the PDCCH even in the DRX active period, thereby implementing power saving.

### Reduced capability (reduced capability, Redcap) terminal

The power saving technology described above may also be used by the Redcap terminal to some extent. The Redcap terminal is a newly introduced terminal device in some communications protocols. The Redcap terminal may be understood as a simplified 5G terminal. In daily life, the Redcap terminal may be implemented as an IoT product around mobile phones, such as a watch or a bracelet. In industry, the Redcap terminal may also be implemented as as a sensor or a servo mechanism. In smart city, the Redcap terminal may be implemented as a camera and the like.

To reduce power consumption of the terminal device, in some scenarios, the Redcap terminal generally does not support relatively complex technical features in NR, for example, carrier aggregation, dual connectivity, high-order multiple-in multiple-out (multiple-in multiple out, MIMO), or a higher-order modulation scheme. In some other scenarios, bandwidth supported by the Redcap terminal is also relatively narrow. For example, maximum bandwidth supported by the Redcap terminal on an FR1 frequency band does not exceed 20 MHz. For another example, maximum bandwidth supported by the Redcap terminal on an FR2 frequency band does not exceed 100 MHz.

Generally, the Redcap terminal is a separate terminal device. Currently, to improve rationality of scheduling, it is stipulated in a known communications protocol that whether the terminal device to be scheduled is a Redcap terminal needs to be known. In some implementations, when accessing a network device, Redcap UE may indicate, to the network device, that the Redcap UE is a Redcap terminal. For example, in a RACH process, the Redcap terminal may add indication information to a message 1 (message1) or a message 3 (message3), so as to indicate that the Redcap terminal is a Redcap terminal.

In some scenarios, to further reduce power consumption of the Redcap terminal, some power saving solutions specifically adapted to the Redcap terminal are further introduced in the known communications protocol. For example, an ultra-long eDRX (greater than 10.24 seconds) is introduced in R18. In addition, it may be learned from the foregoing description of the Redcap terminal that, due to a simplified hardware configuration of the Redcap terminal, when a same power saving technology is used, power required by the Redcap terminal is less than power required by a common terminal. The common terminal may be, for example, a smart terminal and/or an enhanced mobile broadband (enhanced mobile broadband, eMBB) terminal.

Therefore, the applicant proposes that a communications module (also referred to as a "Redcap communications module", or a "simplified communications module") 210 in the Redcap terminal may be integrated into a common terminal 200. As shown in FIG. 2, for the terminal 200, the Redcap communications module 210 may be preferably used to perform communication, and an original communications module 220 in the common terminal may be waked up at a specific occasion. For example, the common terminal is an eMBB terminal, and the original communications module in the common terminal may be referred to as an eMBB communications module. For example, the common terminal is a smart terminal, and the original communications module in the common terminal may be referred to as a smart communications module.

On the other hand, from the perspective of a service, there may also be some services applicable to the Redcap terminal on the common terminal (for example, the eMBB terminal). For example, after various applications (application, App) are activated, a heart beating (heart beating) signal needs to be transmitted to the App to maintain activity, so that when data of the App needs to communicated, the App can quickly perform processing without performing a cold start on the App. If the original communications module is used to process the heart beating signal, power consumption of the terminal device is relatively large. Even if some power saving technologies are used, because the original communications module supports a relative complex technical feature in terms of hardware, the original communications module consumes more power compared with the Redcap communications module.

In some implementations, the Redcap communications module may wake up the original communications module in the terminal. For example, the Redcap communications module may transmit a wake-up instruction to the original communications module in the terminal, so as to wake up the original communications module in the terminal. The wake-up instruction may be transmitted through an internal interface.

In some implementations, the network device (for example, a core network device or an access network device) may communicate with the Redcap communications module. For example, the network device may instruct the Redcap communications module to wake up the original communications module. Certainly, in embodiments of this application, the network device may communicate with the original communications module.

It should be noted that the communications module is not limited in embodiments of this application. In some implementations, the communications module may include a component that is partially or entirely configured to receive a signal, for example, a receiver. In some other implementations, the communications module may include a component that is partially or entirely configured to transmit a signal, for example, a transmitter.

Currently, a power saving technical solution formulated in a communications protocol is formulated only for a terminal device that has a single communications module, without considering the applicability for a terminal device that has a plurality of communications modules. As a result, another communications module in the terminal device cannot communicate with a network device, resulting in a waste.

For example, the terminal device has a reduced-capability communications module and an eMBB communications module. If the network device communicates with the terminal device based on a knowledge that the terminal device has only the eMBB communications module, in a paging phase, the network device communicates with only the eMBB communications module in the terminal device, and another communications module in the terminal device cannot be used. Consequently, the another communications module in the terminal device cannot communicate with the network device, resulting in a waste.

Therefore, for the foregoing problem, an embodiment of this application provides a wireless communication method. In this method, a terminal device may receive, by using a first communications module, a first paging message transmitted by a network device, where the first paging message is used to determine whether to wake up a second communications module. In other words, the terminal device can determine to communicate with the network device by using which communications module based on the first paging message, thereby beneficial to increasing possibilities of communication between the network device and different communications modules in the terminal device, and preventing waste.

For ease of understanding, a wireless communication method according to embodiments of this application is described below with reference to FIG. 3. FIG. 3 is a schematic flowchart of a wireless communication method according to an embodiment of this application. The method shown in FIG. 3 includes step S310.

In step S310, a terminal device receives, by using a first communications module, a first paging message transmitted by a network device, where the first paging message is used to determine whether to wake up a second communications module in the terminal device.

In some implementations, the terminal device may include a plurality of communications modules, and the plurality of communications modules correspond to different communication capabilities and/or power consumption. For example, the plurality of communications modules may include one or more of an eMBB communications module, a Redcap communications module, or a smart communications module.

The foregoing communication capability may be used to indicate whether the terminal device supports a broadband communications service. For example, the terminal device includes the eMBB communication module. A communication capability of the terminal device is used to indicate that the terminal device supports a broadband communications service. For example, the terminal device includes the reduced-capability communications module. A communication capability of the terminal device is used to indicate that the terminal device does not support the broadband communications service.

The foregoing communication capability is used to indicate whether the terminal device supports a narrowband communications service. For example, the terminal device includes the eMBB communication module. A communication capability of the terminal device is used to indicate that the terminal device does not support the narrowband communications service. For example, the terminal device includes the reduced-capability communications module. A communication capability of the terminal device is used to indicate that the terminal device supports the narrowband communications service.

For ease of understanding, the first communications module and the second communications module in the plurality of communications modules are used as examples below for description. A communication capability and/or power consumption of the first communications module may be lower than a communication capability and/or power consumption of the second communications module. In this way, the terminal device may control the second communications module to be in a dormant state, receive the first paging message by using the first communications module, and then determine, based on the first paging message, whether to wake up the second communications module. This is conducive to saving power of the terminal device. For example, the first communications module is a reduced-capability communications module, and the second communications module is an eMBB communications module. For another example, the first communications module is a reduced-capability communications module, and the second communications module is a smart communications module. Certainly, in embodiments of this application, the communication capability and/or power consumption of the first communications module may be higher than the communication capability and/or power consumption of the second communications module.

The communications module in the terminal device in embodiments of this application is described above, and a manner to determine whether to wake up the second communications module based on the first paging message in embodiments of this application is described below. In some implementations, the first paging message may carry first indication information, and instruct, by using the first indication information, to wake up or not to wake up the second communications module.

In some implementations, the first indication information may directly indicate whether to wake up the second communications module. For example, the first indication information may be a value of a bit. When the value of the bit is a first value, the first indication information may instruct to wake up the second communications module. When the value of the bit is a second value, the first indication information may instruct not to wake up the second communications module. The first value is different from the second value. For example, when the first value is 1, the second value may be 0. For another example, when the first value is 0, the second value may be 1.

In some other implementations, different service types may correspond to one communications module. Correspondingly, the first indication information may indicate, by using a service type of a to-be-transmitted service, to wake up or not to wake up the second communications module. For example, it is assumed that a first service type may be associated with the first communications module. In this case, if the service type of the to-be-transmitted service is the first service type, the first indication information is used to instruct not to wake up the second communications module.

Correspondingly, in some implementations, if the service type indicated by the first indication information is associated with the first communications module, the terminal device determines not to wake up the second communications module.

For another example, it is assumed that a second service type may be associated with the second communications module. In this case, if the service type of the to-be-transmitted service is the second service type, the first indication information is used to instruct to wake up the second communications module.

Correspondingly, in some implementations, if the service type indicated by the first indication information is associated with the second communications module, the terminal device determines to wake up the second communications module. The terminal device waking up the second communications module may include that: the first communications module in the terminal device wakes up the second communications module.

In embodiments of this application, the service type is not limited. For example, the second service type may include a media live broadcasting service, an online video call service, or the like. For another example, the first service type may include a web browsing service.

Certainly, in embodiments of this application, a solution used to indicate whether to wake up the second communications module based on the first indication information is not limited. In some implementations, the first indication information may further indicate, by indicating a data volume of the to-be-transmitted service, whether to wake up the second communications module. For example, for a service with a relatively large data volume, the first indication information is used to instruct to wake up the second communications module. For another example, for a service with a relatively small data volume, the first indication information is used to instruct not to wake up the second communications module.

In embodiments of this application, a manner of calculating the data volume is not limited. For example, the service with the relatively large data volume may be a service with a data volume greater than a first threshold per unit of time. For another example, the service with the relatively small data volume may be a service with a data volume less than a second threshold per unit of time. The first threshold may be the same as the second threshold, or the first threshold may be greater than the second threshold.

It should be noted that a transmit end of the first paging message is not limited in embodiments of this application. In some implementations, the transmit end of the first paging message may be an access network device, that is, the access network device may directly transmit the first paging message to the terminal device. In some implementations, the transmit end of the first paging message may be a core network device. In this case, it may be understood that the first paging message is transmitted by the core network device to the terminal device via an access network device.

A method of indicating whether to wake up the second communications module in embodiments of this application is described above. A related operation performed by the terminal device in a case in which the second communications module is waked up or not waked up in embodiments of this application is described below.

In some implementations, the foregoing method further includes: if it is determined not to wake up the second communications module, the terminal device communicates with the network device by using the first communications module, which is conducive to saving power of the terminal device.

It should be noted that, in the foregoing embodiment, if the terminal device determines, based on the first paging message, not to wake up the second communications module, it may be understood as that the first paging message is used to page the first communications module. For example, the first communications module is a Redcap communications module. If the terminal device determines, based on the first paging message, not to wake up the second communications module, it may be understood as that the first paging message is used to page the Redcap communications module. Alternatively, the first paging message may be understood as a paging message that is specified in a known protocol and that is used to wake up the Redcap communications module.

In some implementations, the foregoing method further includes: if it is determined to wake up the second communications module, the terminal device responds to the first paging message by using the second communications module. Alternatively, the terminal device may transmit a response message for the first paging message by using the second communications module.

In some scenarios, before the second communications module transmits the response message for the first paging message, the second communications module may need to obtain the first paging message. In some implementations, the first paging message may be transmitted by the first communications module to the second communications module. That is, after receiving the first paging message, the first communications module may forward the first paging message to the second communications module, so that the second communications module transmits the response message based on the first paging message, thereby being conducive to reducing a delay of receiving the first paging message by the terminal device.

It should be noted that, in embodiments of this application, the first communications module may directly forward the first paging message to the second communications device. Certainly, the first communications module may process the first paging message, and transmit the processed first paging message to the second communications device.

In some other implementations, the first paging message may be independently received by the second communications module. That is, after receiving the first paging message, the first communications module may directly wake up the second communications module, and then, the second communications module may receive the first paging message from the network device, thereby being conducive to improving accuracy of received first paging message.

In embodiments of this application, if the second communications module is waked up, in addition to performing a related operation based on the first paging message, the second communications module may further receive a new paging message (also referred to as a "second paging message"). In other words, the foregoing method further includes: if it is determined to wake up the second communications module, the terminal device receives, on a BWP (for example, an initial BWP) corresponding to the second communications module and by using the second communications module, the second paging message transmitted by the network device.

In some scenarios, before paging the terminal device, the network device needs to learn a capability of the terminal device, so as to improve rationality of paging the terminal device. In some implementations, the foregoing method further includes: transmitting, by the terminal device, terminal capability information to the network device, where the terminal capability information is used to indicate a communications module supported by the terminal device, or is used to indicate a wireless communication capability of the terminal device. Therefore, the terminal capability information is also referred to as wireless communication capability information.

Generally, a terminal device is reported only as a reduced-capability terminal device, or is reported only as a high-capability terminal device. This is because the reduced-capability terminal device is usually a low-cost terminal. In embodiments of this application, the terminal device may be understood as a high-capability terminal device (for example, an eMBB terminal device or a smart terminal). However, because a communications module (a reduced-capability communications module) of the Redcap terminal device is configured, the reported terminal capability information includes a reduced-capability terminal and a high-capability terminal. For example, the terminal capability information is used to indicate that the terminal device supports the first communications module and the second communications module, or the terminal capability information is used to indicate that the terminal device supports reduced-capability communication and high-capability communication (for example, an eMBB communication capability).

It should be noted that the terminal capability information may be reported in response to a request from the network device, or may be independently reported by the terminal device, which is not limited in this embodiment of this application.

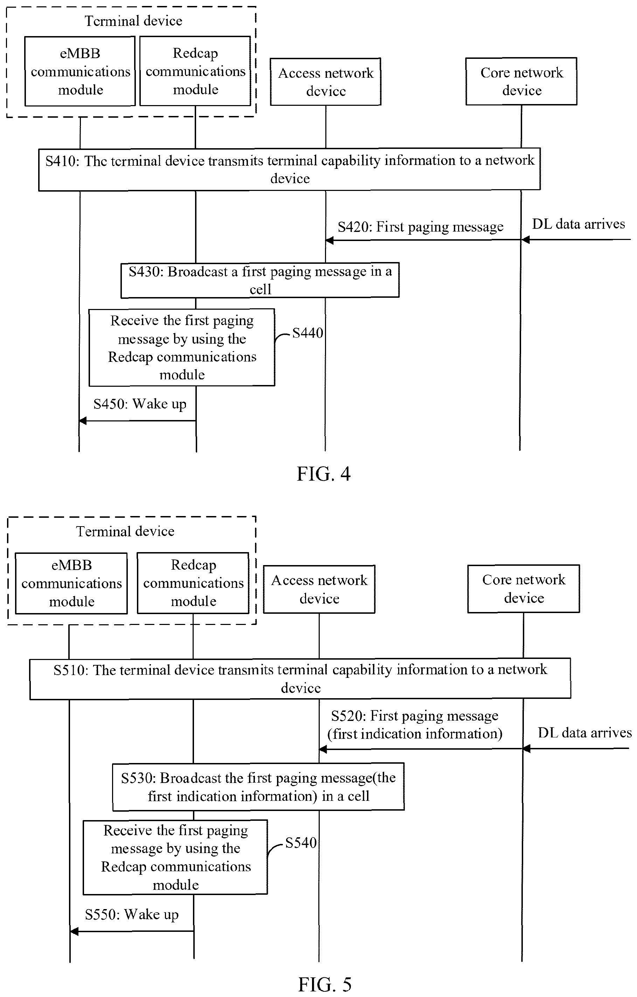

For ease of understanding, a wireless communication method in embodiments of this application is described below with reference to FIG. 4 and FIG. 5 by using an example in which the first communication module is a Redcap communications module and the second communication module is an eMBB communications module. FIG. 4 is described by using an example in which the first paging message directly indicates whether to wake up the second communications module. FIG. 5 is described by using an example in which the first paging message carries indication information of a service type.

FIG. 4 is a flowchart of a wireless communication method according to an embodiment of this application. The method shown in FIG. 4 includes step S410 to step S450.

In step S410, a terminal device transmits terminal capability information to a network device.

In some implementations, the terminal device may report the terminal capability information in response to a requirement of the network device, where the terminal capability information is used to indicate that the terminal device has a Redcap terminal device capability and an eMBB terminal device capability.

In step S420, a core network device transmits a first paging message to an access network device.

In some implementations, if downlink data arrives and needs to be transmitted to the terminal device, the core network device (for example, a 5G core network) may transmit, through an Ng interface, the first paging message to an access network device included in a tracking area identity (tracking area Identity, TAI) list for paging (TAI list for paging). The list is a list of a tracking area in which the terminal device may be located.

In addition, the core network device may determine, based on the terminal capability information, that the terminal device is provided with a Redcap communications module, and the Redcap communications module is configured to assist in waking up an eMBB communications module. In this case, when transmitting a paging message via the Ng interface, the core network device may transmit the first paging message in a manner of transmitting the paging message to the Redcap terminal device.

In step S430, the access network device broadcasts the first paging message in a cell.

It should be noted that a specific TAI included in a TAI list for paging is broadcast in a system message of the cell.

In step S440, the terminal device receives the first paging message by using the Redcap communications module.

In step S450, the Redcap communications module wakes up the eMBB communications module through an internal interface.

In Manner 1, after the Redcap communications module wakes up the eMBB communications module, the Redcap communications module may forward the first paging message to the eMBB communications module, so that the eMBB communications module performs a corresponding operation based on the first paging message. In this case, for the eMBB communications module, it seems that the paging message is received through the eMBB communications module.

In Manner 2, after the Redcap communications module wakes up the eMBB communications module, the eMBB communications module may receive a paging message via a Uu interface. In this case, if the first paging message transmitted to the Redcap communications module is transmitted by using a BWP specially configured for a Redcap terminal, the access network device further needs to transmit a second paging message on an initial BWP (Initial BWP) of this cell. In this case, the eMBB communications module may receive the second paging message on the initial BWP. Then, the eMBB communications module may perform a paging response operation based on the second paging message.

FIG. 5 is a flowchart of a wireless communication method according to an embodiment of this application. The method shown in FIG. 5 includes step S510 to step S550.

In step S510, a terminal device transmits terminal capability information to a network device.

In some implementations, the terminal device may report the terminal capability information in response to a requirement of the network device, where the terminal capability information is used to indicate that the terminal device has a Redcap terminal device capability and an eMBB terminal device capability.

In step S520, a core network device transmits a first paging message to an access network device, where the first paging message includes first indication information, and the first indication information is used to indicate that a service type of a to-be-transmitted service is a second service type.

In some implementations, if downlink data arrives and needs to be transmitted to the terminal device, the core network device (for example, a 5G core network) may transmit, through an Ng interface, the first paging message to an access network device included in a TAI list for paging. The TAI list for paging is a list of a tracking area list in which the terminal device may be located.

In addition, the core network device may determine, based on the terminal capability information, that the terminal device is provided with a Redcap communications module, and the Redcap communications module is configured to assist in waking up an eMBB communications module. In this case, when transmitting a paging message via the Ng interface, the core network device may transmit the first paging message in a manner of transmitting the paging message to a Redcap terminal device.

In step S530, the access network device broadcasts the first paging message in a cell.

In some implementations, each gNB that receives the paging message broadcasts the first paging message in a cell of this base station. A specific TAI included in a TAI list for paging is broadcast in a system message of the cell. The first paging message also includes the foregoing first indication information.

In step S530, the terminal device receives the first paging message by using the Redcap communications module.

In step S540, the Redcap communications module wakes up the eMBB communications module through an internal interface.

In some implementations, the second service type indicated by the first indication information is associated with the eMBB communications module. In this case, the Redcap communications module wakes up the eMBB communications module through the internal interface.

In Manner 1, after the Redcap communications module wakes up the eMBB communications module, the Redcap communications module may forward the first paging message to the eMBB communications module, so that the eMBB communications module performs a corresponding operation based on the first paging message. In this case, for the eMBB communications module, it seems that the paging message is received through the eMBB communications module.

In Manner 2, after the Redcap communications module wakes up the eMBB communications module, the eMBB communications module may receive a paging message via a Uu interface. In this case, if the first paging message transmitted to the Redcap communications module is transmitted by using a bandwidth part (bandwidth part, BWP) specially configured for a Redcap terminal, the access network device further needs to transmit a second paging message on an initial BWP (Initial BWP) of the cell. In this case, the eMBB communications module may receive the second paging message on the initial BWP. Then, the eMBB communications module may perform a paging response operation based on the second paging message.

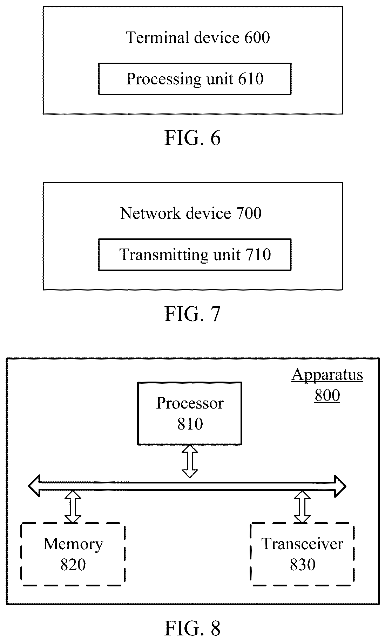

Method embodiments of this application are described in detail above with reference to FIG. 1 to FIG. 5. Apparatus embodiments of this application are described in detail below with reference to FIG. 6 to FIG. 8. It should be understood that the description of the method embodiments corresponds to the description of the apparatus embodiments, and therefore, for a part that is not described in detail, reference may be made to the foregoing method embodiments.

FIG. 6 is a schematic diagram of a terminal device according to an embodiment of this application. The terminal device shown in FIG. 6 includes a processing unit 610.

The processing unit 610 receives, by using a first communications module, a first paging message transmitted by a network device, where the first paging message is used to determine whether to wake up a second communications module in the terminal device, and a communication capability of the first communications module is different from a communication capability of the second communications module.

In a possible implementation, the first paging message carries first indication information, and the first indication information is used to instruct to wake up or not to wake up the second communications module.

In a possible implementation, the first indication information instructs, by indicating a service type of a to-be-transmitted service, to wake up or not to wake up the second communications module.

In a possible implementation, if the service type indicated by the first indication information is associated with the first communications module, the processing unit is configured to determine not to wake up the second communications module; and/or if the service type indicated by the first indication information is associated with the second communications module, the processing unit is configured to determine to wake up the second communications module.

In a possible implementation, if it is determined not to wake up the second communications module, the processing unit is configured to communicate with the network device by using the first communications module.

In a possible implementation, if it is determined to wake up the second communications module, the processing unit is configured to respond to the first paging message by using the second communications module.

In a possible implementation, if it is determined to wake up the second communications module, the processing unit is configured to receive, on an initial BWP and by using the second communications module, a second paging message transmitted by the network device.

In a possible implementation, the terminal device further includes a transmitting unit, configured to transmit terminal capability information to the network device, where the terminal capability information is used to indicate that the terminal device supports the first communications module and the second communications module.

In a possible implementation, the network device is an access network device or a core network device.

In a possible implementation, if the network device is a core network device, the first paging message is transmitted by the core network device to the terminal device via the access network device; or if the network device is an access network device, the first paging message is transmitted by the access network device to the terminal device.

In a possible implementation, the communication capability is used to indicate whether the first device supports a broadband communications service, and/or the communication capability is used to indicate whether the first device supports a narrowband communications service.

In a possible implementation, the first communications module is a reduced-capability communications module, and/or the second communications module is an eMBB communications module or a smart communications module.

FIG. 7 is a schematic diagram of a network device according to an embodiment of this application. A network device 700 shown in FIG. 7 includes a transmitting unit 710.

The transmitting unit 710 is configured to transmit a first paging message to a first communications module in a terminal device, where the first paging message is used to determine whether to wake up a second communications module in the terminal device, and a communication capability of the first communications module is different from a communication capability of the second communications module.

In a possible implementation, the first paging message carries first indication information, and the first indication information is used to instruct to wake up or not to wake up the second communications module.

In a possible implementation, the first indication information instructs, by indicating a service type of a to-be-transmitted service, to wake up or not to wake up the second communications module.

In a possible implementation, if the service type indicated by the first indication information is associated with the first communications module, the first indication information is used to determine not to wake up the second communications module; and/or if the service type indicated by the first indication information is associated with the second communications module, the first indication information is used to determine to wake up the second communications module.

In a possible implementation, the network device further includes a first processing unit, configured to: if it is determined not to wake up the second communications module, communicate with the terminal device by using the first communications module.

In a possible implementation, the network device further includes a second processing unit, configured to: if it is determined to wake up the second communications module, receive a response message of the first paging message by using the second communications module.

In a possible implementation, if it is determined to wake up the second communications module, the transmitting unit is configured to transmit a second paging message on an initial BWP.

In a possible implementation, the network device further includes a receiving unit, configured to receive terminal capability information transmitted by the terminal device, where the terminal capability information is used to indicate that the terminal device supports the first communications module and the second communications module.

In a possible implementation, the network device is an access network device or a core network device.

In a possible implementation, if the network device is a core network device, the first paging message is transmitted by the core network device to the terminal device via the access network device; or if the network device is an access network device, the first paging message is transmitted by the access network device to the terminal device.

In a possible implementation, the communication capability is used to indicate whether the first device supports a broadband communications service, and/or the communication capability is used to indicate whether the first device supports a narrowband communications service.

In a possible implementation, the first communications module is a reduced-capability communications module, and/or the second communications module is an eMBB communications module or a smart communications module.

In an optional embodiment, the processing unit 610 may be a processor 810. The terminal device 600 may further include a transceiver 830 and a memory 820, as shown in FIG. 8.

In an optional embodiment, the transmitting unit 710 may be the transceiver 830. A network device 800 may further include a processor 810 and a memory 820, as shown in FIG. 8.

FIG. 8 is a schematic structural diagram of a communications apparatus according to an embodiment of this application. Dashed lines in FIG. 8 indicate that a unit or module is optional. The apparatus 800 may be configured to implement the method described in the foregoing method embodiments. The apparatus 800 may be a chip, a terminal device, or a network device.

The apparatus 800 may include one or more processors 810. The processor 810 may support the apparatus 800 in implementing the method described in the foregoing method embodiments. The processor 810 may be a general-purpose processor or a dedicated processor. For example, the processor may be a central processing unit (central processing unit, CPU). Alternatively, the processor may be another general-purpose processor, a digital signal processor (digital signal processor, DSP), an application-specific integrated circuit (application specific integrated circuit, ASIC), a field programmable gate array (field programmable gate array, FPGA) or another programmable logic device, a discrete gate or transistor logic device, a discrete hardware component, or the like. The general-purpose processor may be a microprocessor, or the processor may be any conventional processor or the like.

The apparatus 800 may further include one or more memories 820. The memory 820 stores a program, and the program may be executed by the processor 810, to cause the processor 810 to perform the method described in the foregoing method embodiments. The memory 820 may be separate from the processor 810 or may be integrated into the processor 810.

The apparatus 800 may further include a transceiver 830. The processor 810 may communicate with another device or chip by using the transceiver 830. For example, the processor 810 may transmit data to and receive data from another device or chip by using the transceiver 830.

An embodiment of this application further provides a computer-readable storage medium for storing a program. The computer-readable storage medium may be applied to a terminal or a network device provided in embodiments of this application, and the program causes a computer to perform the method performed by the terminal or the network device in various embodiments of this application.

An embodiment of this application further provides a computer program product. The computer program product includes a program. The computer program product may be applied to a terminal or a network device provided in embodiments of this application, and the program causes a computer to perform the method performed by the terminal or the network device in various embodiments of this application.

An embodiment of this application further provides a computer program. The computer program may be applied to a terminal or a network device provided in embodiments of this application, and the computer program causes a computer to perform the method performed by the terminal or the network device in various embodiments of this application.

It should be understood that the terms "system" and "network" in this application may be used interchangeably. In addition, the terms used in this application are used only to illustrate specific embodiments of this application, but are not intended to limit this application. The terms "first", "second", "third", "fourth", and the like in the specification, claims, and drawings of this application are used to distinguish between different objects, rather than to describe a specific order. In addition, the terms "include" and "have" and any variations thereof are intended to cover a non-exclusive inclusion.

In embodiments of this application, "indication" mentioned herein may refer to a direct indication, or may refer to an indirect indication, or may mean that there is an association relationship. For example, if A indicates B, it may mean that A directly indicates B, for example, B can be obtained from A. Alternatively, it may mean that A indirectly indicates B, for example, A indicates C, and B can be obtained from C. Alternatively, it may mean that there is an association relationship between A and B.

In embodiments of this application, "B corresponding to A" means that B is associated with A, and B may be determined based on A. However, it should be further understood that, determining B based on A does not mean determining B based only on A, but instead, B may be determined based on A and/or other information.

In descriptions of embodiments of this application, the term "corresponding" may mean that there is a direct or indirect correspondence between two elements, or that there is an association relationship between two elements, or that there is a relationship of "indicating" and "being indicated", "configuring" and "being configured", or the like.

In embodiments of this application, "predefined" or "pre-configured" may be implemented by pre-storing corresponding code, tables, or other forms that may be used to indicate related information in devices (for example, including a terminal device and a network device), and a specific implementation thereof is not limited in this application. For example, being pre-defined may refer to being defined in a protocol.

In embodiments of this application, the "protocol" may refer to a standard protocol in the communications field, and may include, for example, an LTE protocol, an NR protocol, and a related protocol applied to a future communications system, which is not limited in this application.

In embodiments of this application, the term "and/or" is merely an association relationship that describes associated objects, and represents that there may be three relationships. For example, A and/or B may represent three cases: only A exists, both A and B exist, and only B exists. In addition, the character "/" in this specification generally indicates an "or" relationship between the associated objects.

In embodiments of this application, sequence numbers of the foregoing processes do not mean execution sequences. The execution sequences of the processes should be determined according to functions and internal logic of the processes, and should not be construed as any limitation on the implementation processes of embodiments of this application.

In several embodiments provided in this application, it should be understood that the disclosed system, apparatus, and method may be implemented in another manner. For example, the described apparatus embodiments are merely examples. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented as indirect couplings or communication connections through some interfaces, apparatus or units, and may be implemented in electronic, mechanical, or other forms.

The units described as separate parts may or may not be physically separate, and parts displayed as units may or may not be physical units, and may be located in one position, or may be distributed on a plurality of network units. Some or all of the units may be selected according to actual needs to achieve the objective of the solutions of embodiments.

In addition, functional units in embodiments of this application may be integrated into one processing unit, or each of the units may exist alone physically, or two or more units may be integrated into one unit.

All or some of the foregoing embodiments may be implemented by using software, hardware, firmware, or any combination thereof. When software is used to implement embodiments, the foregoing embodiments may be implemented completely or partially in a form of a computer program product. The computer program product includes one or more computer instructions. When the computer program instructions are loaded and executed on a computer, the procedures or functions according to embodiments of this application are completely or partially generated. The computer may be a general-purpose computer, a dedicated computer, a computer network, or another programmable apparatus. The computer instructions may be stored in a computer-readable storage medium or transmitted from one computer-readable storage medium to another computer-readable storage medium. For example, the computer instructions may be transmitted from a website, computer, server, or data center to another website, computer, server, or data center in a wired (for example, a coaxial cable, an optical fiber, and a digital subscriber line (digital subscriber line, DSL)) manner or a wireless (for example, infrared, radio, and microwave) manner. The computer-readable storage medium may be any usable medium readable by the computer, or a data storage device, such as a server or a data center, integrating one or more usable media. The usable medium may be a magnetic medium (for example, a floppy disk, a hard disk, or a magnetic tape), an optical medium (for example, a digital video disc (digital video disc, DVD)), a semiconductor medium (for example, a solid-state drive (solid state disk, SSD)), or the like.

The foregoing descriptions are merely specific implementations of this application, but the protection scope of this application is not limited thereto. Any variation or replacement readily figured out by a person skilled in the art within the technical scope disclosed in this application shall fall within the protection scope of this application. Therefore, the protection scope of this application shall be subject to the protection scope of the claims.

## Claims

1. A wireless communication method, comprising:
receiving, by a terminal device by using a first communications module, a first paging message transmitted by a network device, wherein the first paging message is used to determine whether to wake up a second communications module in the terminal device;
wherein a communication capability of the first communications module is different from a communication capability of the second communications module.

2. The method according to claim 1, wherein the first paging message carries first indication information, and the first indication information is used to instruct to wake up or not to wake up the second communications module.

3. The method according to claim 2, wherein the first indication information instructs, by indicating a service type of a to-be-transmitted service, to wake up or not to wake up the second communications module.

4. The method according to claim 3, wherein the method further comprises:
if the service type indicated by the first indication information is associated with the first communications module, determining, by the terminal device, not to wake up the second communications module; and/or
if the service type indicated by the first indication information is associated with the second communications module, determining, by the terminal device, to wake up the second communications module.

5. The method according to any one of claims 1 to 4, wherein the method further comprises:
if it is determined not to wake up the second communications module, communicating, by the terminal device, with the network device by using the first communications module.

6. The method according to any one of claims 1 to 4, wherein the method further comprises:
if it is determined to wake up the second communications module, responding, by the terminal device, to the first paging message by using the second communications module.

7. The method according to any one of claims 1 to 4, wherein the method further comprises:
if it is determined to wake up the second communications module, receiving, on an initial BWP by the terminal device by using the second communications module, a second paging message transmitted by the network device.

8. The method according to any one of claims 1 to 7, wherein the method further comprises:
transmitting, by the terminal device, terminal capability information to the network device, wherein the terminal capability information is used to indicate that the terminal device supports the first communications module and the second communications module.

9. The method according to any one of claims 1 to 8, wherein the network device is an access network device or a core network device.

10. The method according to claim 9, wherein if the network device is a core network device, the first paging message is transmitted by the core network device to the terminal device via an access network device; or
if the network device is an access network device, the first paging message is transmitted by the access network device to the terminal device.

11. The method according to any one of claims 1 to 10, wherein the communication capability is used to indicate whether a first device supports a broadband communications service, and/or the communication capability is used to indicate whether the first device supports a narrowband communications service.

12. The method according to any one of claims 1 to 11, wherein the first communications module is a reduced-capability communications module, and/or the second communications module is an eMBB communications module or a smart communications module.

13. A wireless communication method, comprising:
transmitting, by a network device, a first paging message to a first communications module in a terminal device, wherein the first paging message is used to determine whether to wake up a second communications module in the terminal device;
wherein a communication capability of the first communications module is different from a communication capability of the second communications module.

14. The method according to claim 13, wherein the first paging message carries first indication information, and the first indication information is used to instruct to wake up or not to wake up the second communications module.

15. The method according to claim 14, wherein the first indication information instructs, by indicating a service type of a to-be-transmitted service, to wake up or not to wake up the second communications module.

16. The method according to claim 15, wherein if the service type indicated by the first indication information is associated with the first communications module, the first indication information is used to determine not to wake up the second communications module; and/or
if the service type indicated by the first indication information is associated with the second communications module, the first indication information is used to determine to wake up the second communications module.

17. The method according to any one of claims 13 to 16, wherein the method further comprises:
if it is determined not to wake up the second communications module, communicating, by the network device, with the terminal device by using the first communications module.

18. The method according to any one of claims 13 to 16, wherein the method further comprises:
if it is determined to wake up the second communications module, receiving, by the network device, a response message of the first paging message by using the second communications module.

19. The method according to any one of claims 13 to 16, wherein the method further comprises:
if it is determined to wake up the second communications module, transmitting, by the network device, a second paging message on an initial BWP.

20. The method according to any one of claims 13 to 19, wherein the method further comprises:
receiving, by the network device, terminal capability information transmitted by the terminal device, wherein the terminal capability information is used to indicate that the terminal device supports the first communications module and the second communications module.

21. The method according to any one of claims 13 to 20, wherein the network device is an access network device or a core network device.

22. The method according to claim 21, wherein if the network device is a core network device, the first paging message is transmitted by the core network device to the terminal device via an access network device; or
if the network device is an access network device, the first paging message is transmitted by the access network device to the terminal device.

23. The method according to any one of claims 13 to 22, wherein the communication capability is used to indicate whether the first device supports a broadband communications service, and/or the communication capability is used to indicate whether the first device supports a narrowband communications service.

24. The method according to any one of claims 13 to 23, wherein the first communications module is a reduced-capability communications module, and/or the second communications module is an eMBB communications module or a smart communications module.

25. A terminal device, comprising:
a processing unit, configured to receive, by using a first communications module, a first paging message transmitted by a network device, wherein the first paging message is used to determine whether to wake up a second communications module in the terminal device;
wherein a communication capability of the first communications module is different from a communication capability of the second communications module.

26. The terminal device according to claim 25, wherein the first paging message carries first indication information, and the first indication information is used to instruct to wake up or not to wake up the second communications module.

27. The terminal device according to claim 26, wherein the first indication information instructs, by indicating a service type of a to-be-transmitted service, to wake up or not to wake up the second communications module.

28. The terminal device according to claim 27, wherein if the service type indicated by the first indication information is associated with the first communications module, the processing unit is configured to determine not to wake up the second communications module; and/or
if the service type indicated by the first indication information is associated with the second communications module, the processing unit is configured to determine to wake up the second communications module.

29. The terminal device according to any one of claims 25 to 28, wherein if it is determined not to wake up the second communications module, the processing unit is configured to communicate with the network device by using the first communications module.

30. The terminal device according to any one of claims 25 to 28, wherein if it is determined to wake up the second communications module, the processing unit is configured to respond to the first paging message by using the second communications module.

31. The terminal device according to any one of claims 25 to 28, wherein if it is determined to wake up the second communications module, the processing unit is configured to receive, on an initial BWP by using the second communications module, a second paging message transmitted by the network device.

32. The terminal device according to any one of claims 25 to 31, wherein the terminal device further comprises:
a transmitting unit, configured to transmit terminal capability information to the network device, wherein the terminal capability information is used to indicate that the terminal device supports the first communications module and the second communications module.

33. The terminal device according to any one of claims 25 to 32, wherein the network device is an access network device or a core network device.

34. The terminal device according to claim 33, wherein if the network device is a core network device, the first paging message is transmitted by the core network device to the terminal device via an access network device; or
if the network device is an access network device, the first paging message is transmitted by the access network device to the terminal device.

35. The terminal device according to any one of claims 25 to 34, wherein the communication capability is used to indicate whether the first device supports a broadband communications service, and/or the communication capability is used to indicate whether the first device supports a narrowband communications service.

36. The terminal device according to any one of claims 25 to 35, wherein the first communications module is a reduced-capability communications module, and/or the second communications module is an eMBB communications module or a smart communications module.

37. A network device, comprising:
a transmitting unit, configured to transmit a first paging message to a first communications module in a terminal device, wherein the first paging message is used to determine whether to wake up a second communications module in the terminal device;
wherein a communication capability of the first communications module is different from a communication capability of the second communications module.

38. The network device according to claim 37, wherein the first paging message carries first indication information, and the first indication information is used to instruct to wake up or not to wake up the second communications module.

39. The network device according to claim 38, wherein the first indication information instructs, by indicating a service type of a to-be-transmitted service, to wake up or not to wake up the second communications module.

40. The network device according to claim 39, wherein if the service type indicated by the first indication information is associated with the first communications module, the first indication information is used to determine not to wake up the second communications module; and/or
if the service type indicated by the first indication information is associated with the second communications module, the first indication information is used to determine to wake up the second communications module.

41. The network device according to any one of claims 37 to 40, wherein the network device further comprises:
a first processing unit, configured to: if it is determined not to wake up the second communications module, communicate with the terminal device by using the first communications module.

42. The network device according to any one of claims 37 to 40, wherein the network device further comprises:
a second processing unit, configured to: if it is determined to wake up the second communications module, receive a response message of the first paging message by using the second communications module.

43. The network device according to any one of claims 37 to 40, wherein if it is determined to wake up the second communications module, the transmitting unit is configured to transmit a second paging message on an initial BWP.

44. The network device according to any one of claims 37 to 43, wherein the network device further comprises:
a receiving unit, configured to receive terminal capability information transmitted by the terminal device, wherein the terminal capability information is used to indicate that the terminal device supports the first communications module and the second communications module.

45. The network device according to any one of claims 37 to 44, wherein the network device is an access network device or a core network device.

46. The network device according to claim 45, wherein if the network device is a core network device, the first paging message is transmitted by the core network device to the terminal device via an access network device; or
if the network device is an access network device, the first paging message is transmitted by the access network device to the terminal device.

47. The network device according to any one of claims 37 to 46, wherein the communication capability is used to indicate whether the first device supports a broadband communications service, and/or the communication capability is used to indicate whether the first device supports a narrowband communications service.

48. The network device according to any one of claims 37 to 47, wherein the first communications module is a reduced-capability communications module, and/or the second communications module is an eMBB communications module or a smart communications module.

49. A terminal device, comprising a transceiver, a memory, and a processor, wherein the memory is configured to store a program, and the processor is configured to invoke the program in the memory and control the transceiver to receive or transmit a signal, to cause the terminal device to perform the method according to any one of claims 1 to 12.

50. A network device, comprising a transceiver, a memory, and a processor, wherein the memory is configured to store a program, and the processor is configured to invoke the program in the memory and control the transceiver to transmit or receive a signal, to cause the network device to perform the method according to any one of claims 13 to 24.

51. An apparatus, comprising a processor configured to invoke a program from a memory, to cause the apparatus to perform the method according to any one of claims 1 to 24.

52. A chip, comprising a processor configured to invoke a program from a memory, to cause a device on which the chip is installed to perform the method according to any one of claims 1 to 24.

53. A computer-readable storage medium, wherein the computer-readable storage medium stores a program, and the program causes a computer to perform the method according to any one of claims 1 to 24.

54. A computer program product, comprising a program, wherein the program causes a computer to perform the method according to any one of claims 1 to 24.

55. A computer program, wherein the computer program causes a computer to perform the method according to any one of claims 1 to 24.
